# EUROPEAN PATENT SPECIFICATION

(11) **EP 4 015 493 B1**
(45) Date of publication and mention of the grant of the patent: **27.09.2023**
(21) Application number: 21210914.4
(22) Date of filing: 28.11.2021
(51) Int. Cl.: C05D 9/02, C05G 3/00

(54) **IODINE-SELENIUM PREPARATION AND THE USE OF THE IODINE-SELENIUM PREPARATION IN PLANT CULTIVATION**
IOD-SELENIUM-PRÄPARAT UND VERWENDUNG DES IOD-SELENIUM-PRÄPARATS IN DER PFLANZENZUCHT
PRÉPARATION D'IODE-SÉLÉNIUM ET UTILISATION DE LA PRÉPARATION D'IODE-SÉLÉNIUM DANS LA CULTURE DE PLANTES

(30) Priority: 19.12.2020 PL 43640320
(43) Date of publication of application: 22.06.2022
(73) Proprietor: INTERMAG SP. Z O.O, 32-300 Olkusz (PL)
(72) Inventor: Kardasz, Hubert, 32-300 Olkusz (PL); Ambroziak, Krzysztof, 31-345 Cracow (PL); Grzanka, Marlena, 32-353 Jangrot (PL); Pasnik, Konrad Pasnik, 42-500 Bedzin (PL)
(74) Representative: JWP Patent & Trademark Attorneys

(56) References cited:
- EP-A1- 3 569 584
- PL-B1- 228 655
- RU-A- 2013 119 081
- IZYDORCZYK GRZEGORZ ET AL: "Biofortification of edible plants with selenium and iodine - A systematic literature review", SCIENCE OF THE TOTAL ENVIRONMENT, ELSEVIER, AMSTERDAM, NL, vol. 754, 28 August 2020 (2020-08-28), XP086358758, ISSN: 0048-9697, DOI: 10.1016/J.SCITOTENV.2020.141983 [retrieved on 2020-08-28]

## Description

The object of the present invention is an iodine-selenium preparation according to claim 1, in the form of an aqueous solution, intended for biofortification of plants in iodine and selenium, the elements needed for the proper functioning of the human body.

The object of the present invention is also the use of the iodine-selenium preparation in plant cultivation according to claim 4.

It is well-known that iodine and selenium are the elements needed for the proper functioning of the human body. Iodine plays a very important role not only in the proper functioning of the thyroid but also in the proper development of the brain during the prenatal period and infancy, among other things. The main source of iodine in the diet are products of marine origin, such as fish and seaweed, dairy products, and eggs, as well as drinking water and table salt, which is iodized in most countries. However, scientific research has proven the harmfulness of excessive salt amount in food, which can lead to the development of diseases such as hypertension and heart disease, thus doctors suggest reducing salt intake. Consequently, this results in a decrease in iodine intake.

Selenium is also an essential and vital element that is found in the human body in trace amounts. Its presence determines the proper course of many physiological and biochemical processes. This is related to its presence in metabolically important proteins belonging to the group of selenoproteins. Many current studies also focus on the anti-cancer properties of selenium, as a clear correlation has been found between increased cancer incidence and selenium deficiencies in the diet. Selenium is mainly supplied to human body via food. The primary source of this element are products of plant and animal origin. The level of selenium in food products depends on its content in the soil, soil type, agroclimatic conditions, and crop type. An insufficient amount of selenium supplied to the body with food may be supplemented by the use of appropriately balanced pharmaceutical preparations, as well as dietary supplements containing this element.

A more effective way of introducing iodine and selenium into the diet is the so-called plant biofortification. This is a process of cultivating plants rich in bioavailable amounts of elements that are not sufficiently present in the human diet. Such food naturally reduces various kinds of health problems occurring in humans. It is believed that iodine and selenium contained in plants can be relatively easily available to human body.

Preparations for enriching crops with iodine and selenium are known from the patent literature.

A composition from patent description EP1153901 B1 is known to increase the nutritional value of vegetables, in the form of an aqueous solution, containing selenium salts with a selenium content per liter of the solution in the range of 0.005 mg to 20 g and vanadium salts with a vanadium content per liter of the solution in the range of 0.0005 mg to 3 g. Additionally, the composition contains iodine salts with an iodine content per liter of the solution in the range of 0.005 mg to 20 g. The selenate (IV) salts (selenites) and selenate (VI) (selenates) salts of sodium, potassium, calcium, magnesium, barium, copper, ammonium, and zinc are used as selenium salts. Vanadium salts generally consist of sodium, potassium, and ammonium metavanadates and vanadates, and sodium, potassium, calcium, magnesium, barium, copper, and ammonium iodides are used as iodine salts. The composition may further comprise liquid ingredients acting on the plant cell membrane such as surfactants, biopolymers, chelating agents, amino acids, and polyvinyl alcohol in combination with or without fertilizers.

Application CN105837286 A discloses a preparation containing selenium and iodine, a method of obtaining the preparation, and its use in cultivating lettuce. The preparation contains 0.05-1.00 parts by mass of selenium source, 0.2-5.0 parts by mass of iodine source, 60-90 parts by mass of organic fertilizer, 0.2-0.5 parts by mass of borax, 0.1-1.1 parts by mass of manganese sulfate and 0.4-1.2 parts by mass of binder. Preferably, the source of selenium is a natural mineral containing selenium, and the source of iodine is salt, most preferably potassium iodide. The method of obtaining the preparation includes performing grinding on a selenium source and iodine source in order to obtain a fine powder with a particle size of less than 50 µm, wherein the powder content at the nanometer level is within the range of 5-20% by weight, and crushing the borax and manganese sulfate. Organic fertilizer is also dried and crushed, mixed with selenium source, iodine source, borax, manganese sulfate subjected to the above processes, and granulated with a disc granulator while still using a binder.

An aqueous composition is known from application EP3569584 A1, intended especially for cereals, which contains selenium, iodine, and an additive selected from leonardite humic extract, silicon-based additive, and mixtures thereof. Preferably, selenium is in the form of sodium selenate (IV) (selenite) or sodium selenate (VI) and is contained in the composition in an amount of from 0.001 to 10 g/l of the aqueous composition. Iodine is in the form of one or more salts selected from the group consisting of sodium iodide and iodate, calcium iodide and iodate, magnesium iodide and iodate, ammonium iodide and iodate, zinc iodide and iodate, copper iodide and iodate, barium iodide and iodate, cesium iodide and iodate, potassium iodide, and is contained in the composition in an amount of from 0.01 to 50 g/l of the aqueous composition. The composition is prepared by mixing the ingredients with water at a temperature of24-26°C. The composition is applicable to cereals selected from the group consisting of wheat, barley, maize, rye, and rice. A foliar spray is applied at a rate of 100 to 900 l, preferably 200 to 500 l, per hectare of the crop, in one or more treatments carried out from 2 months to the day before the harvest, preferably 1 month to 15 days before the harvest. The composition can be used to enrich in iodine and selenium also other crops such as potatoes, onions, eggplant, zucchini, beets, cucumber, carrots, tomato, beans, watermelon, melon, rapeseed, and others.

The object of the invention disclosed in patent description PL228655 B1 is a method for biofortifying vegetables with iodine, consisting in using a solution of iodine salts, such as KI, KIO₃, salicylic acid, and a medium containing macronutrients and micronutrients in hydroponic crops for plant fertigation, where the concentration of iodine in the iodine salt solution used ranges from 0.0001 to 0.0004% (m/m), while the concentration of salicylic acid ranges from 0.01 to 10 mg per dm³. Plant fertigation with a mixture of iodine, salicylic acid, and media is carried out each time during the watering of plants throughout the entire period of their vegetation, starting 2-3 weeks after planting the plants in a permanent place, until the end of the harvest of the consumable part of the plants, so that the total dose of iodine for plants with a short vegetation period is from 1 to 4 kg I/ha of the crop, and for plants with a long vegetation period - from 4 to 20 kg I/ha of the crop, while the total dose of salicylic acid for plants with a short vegetation period is from 0.1 to 4 kg/ha of the crop, and for plants with a long vegetation period - not more than 20 kg/ha of the crop.

A method for enriching potato, carrot, and onion crops with iodine is known from application WO2009/087178 A1, consisting in treating them with an aqueous iodine salt solution containing from 1 to 50 g/l of iodine with the addition of phosphoric acid, maintaining the pH of the solution at 1-7. The solution is applied in such an amount that there is 1.2 to 30 kg of iodine per hectare of soil.

A method for enriching fruit with selenium, iodine, zinc, magnesium, and manganese is known from patent description RU2533913 C1. The method consists of treating it with a foliar aqueous solution containing sodium selenate (VI) at a concentration of 3 mg/l, potassium iodide at a concentration of 250 mg/l, zinc sulfate at a concentration of 2 g/l, magnesium sulfate at a concentration of 12 g/l, manganese sulfate at a concentration of 0.6 g/l and the addition of 15 g/l of calcium hydroxide to avoid plant burns. The method allows increasing the natural content of selenium 1.4-2.5 times, iodide 1.2-2.6 times, zinc 1.15-1.3 times, magnesium 1.1-2.5 times, manganese 1.1-1.5 times. Spraying is carried out for each plant, respectively, e.g. for black chokeberry - in the first decade of July with a solution and the amount of 300-500 l per 100 shrubs, for garden strawberries - in the second decade of May with a solution with a concentration of 750 l/ha, for apple trees - in the first decade of July with a solution in the amount of 600-1000 l per 100 trees.

The effective result of biofortification largely depends on the species of biofortified plant, and the preference for species also relates to the form of application of iodine and selenium. Literature, e.g. S. Smoleń et al. titled "Biofortification of Carrot (Daucus carota L.) with Iodine and Selenium in a Field Experiment", Front. Plant Sci. 2016, 7:730, indicates a more efficient and safer foliar application with iodine and selenium compounds, due to better utilization and uptake of the element by above-ground parts of the plant and subsequent transport to generative parts, or to storage organs. Soil application may result in the accumulation of the element in the soil causing toxic effects on plants.

As the dose increases, the degree of accumulation of iodine and selenium in individual plant organs increases. The effect of phytotoxicity may be caused by the high accumulation of these elements in plant organs resulting from the application of high concentrations of this form of the element or by intracortical oxidation processes of iodine I- to I2 forms. A feature of greater bioavailability for plants is the iodide form, and the iodate form must be reduced before the uptake. In the case of selenium, selenates (VI) are more bioavailable and more efficiently transported to the edible parts of plants compared to selenates (IV), which are also more toxic to plants.

The technical issue to be solved is the development of a preparation for use in plant cultivation, with an optimal content of iodine and selenium from the point of view of the uptake of these elements by plants, and at the same time stable over a long period of time, which is important for the use of the preparation.

The essence of the iodine-selenium preparation, in the form of an aqueous solution containing potassium iodide and sodium selenate (VI), is that 1000 dm³ of the preparation contains 66-396 kg of potassium iodide (iodine content 50-300 g/dm³), 6-36 kg of sodium selenate (VI) (selenium content 2.5-15 g/dm³), 2-30 kg of sodium salicylate (2-30 g/dm³), and the pH of the preparation is in the range of 7-10.

Preferably, the 1000 dm³ of the preparation comprises 264 kg of potassium iodide (200 g/dm³ of iodine), 24 kg of sodium selenate (VI) (10 g/dm³ of selenium), and 20 kg of sodium salicylate.

Preferably, 1000 dm³ of the preparation contains ammonia water in an amount of up to 50 dm³.

The essence of the solution is also the use of an iodine-selenium preparation in the form of an aqueous solution containing in 1000 dm³: 66-396 kg of potassium iodide, 6-36 kg of sodium selenate (VI), 2-30 kg of sodium salicylate, the pH of which is in the range of 7-10, in plant cultivation, in a single dose of 0.5-1 dm³/ha of the crop, in the form of working solution, wherein the preparation is administered to the leaves or roots of the plants.

Preferably, for the cultivation of vegetable plants, 2-4 foliar applications are used during the vegetation period, every 2-14 days, with the first application taking place during the growing period of the harvestable plant part, and the amount of working solution is 200-400 dm³/ha per one application.

Preferably, for the cultivation of vegetable plants, in soil cultivation, the preparation is used every 2-3 fertigation cycles, starting from the initial development phases of the plant's harvestable part, wherein the cycles take place every 7 days, using a solution containing 5·10⁻⁶ dm³ of the preparation in 1 dm³ of water per one fertigation cycle, and in soilless cultivation, the preparation is used with each fertigation cycle, using a solution containing 5·10⁻⁶ dm³ of the preparation in 1 dm³ of water.

Preferably, for the cultivation of agricultural plants, 2-3 foliar applications are used every 7-14 days, and the amount of working solution is 200-300 dm³/ha per one application.

Preferably, for the cultivation of orchards and berries, 2-4 foliar applications are used during the vegetation period, every 7-14 days, with the first application taking place during the fruit setting period, while in the case it is necessary to limit the number of treatments, these are carried out in the final development stages, 1-3 weeks before the harvest, and the amount of working solution is 400-750 dm³/ha per one application.

Preferably, for the soil cultivation of orchards and berries, the preparation is used every 2-3 fertigation cycles, starting from the end of flowering and ending with fruit harvest, wherein the cycles take place every 7 days, using a solution containing 5·10⁻⁶ dm³ of the preparation in 1 dm³ of water per one fertigation cycle, and for soilless cultivation, the preparation is used with each fertigation cycle, using a solution containing 5·10⁻⁶ dm³ of the preparation in 1 dm³ of water.

The iodine-selenium preparation of the present invention is characterized by high stability over time, at low -5°C and high 30°C storage temperatures. As a result, the preparation can be stored for a longer period of time, and if not fully used it can be reused in the next vegetation period, which is important for the users of the preparation. The addition of sodium salicylate to the preparation ensures that no iodine is released from the preparation, nor does the amount of iodine in the preparation solution diminish, by being released in the gaseous form or falling off as a precipitate. This phenomenon is known and has been described, for example, in the publication by K. Waszkowiak, K. Szymander-Buszek, titled: "Effect of storage conditions on potassium iodide stability in iodised table salt and collagen preparations", International Journal of Food Science &Technology, 2008, 43 (5): 895-9. It was observed in preparations containing the same amounts of ingredients contributing iodine and selenium (potassium iodide and sodium selenate (VI)) but without the presence of sodium salicylate.

Another positive and surprising effect of sodium salicylate contained in the preparation is its effect on the increase in the absorption of iodine and selenium by plants. This results in an increase in the dietary value of crops after application of the preparation, supplementing them with bioavailable nutrients that have positive effects on human health. As confirmed by the conducted experiments on various types of crops, the presence of sodium salicylate in the preparation significantly increased the level of iodine and selenium uptake by plants. From the manufacturer's perspective, the preparation used, containing a combination of iodine, selenium, and sodium salicylate, results in an increase in yield, quality and plants condition, and, moreover, an unexpected improvement in the physiological parameters of plants was observed, tested in vivo, without destroying the plant.

The iodine-selenium preparation and the use of the iodine-selenium preparation in plant cultivation are explained in detail in the following embodiments. However, these examples should not be treated as limiting the essence of the solution or limiting the scope of the protection of the present invention, because they are merely its illustration.

### Example 1

An iodine-selenium preparation in the form of an aqueous solution (Formulation A) in 1000 dm³ contains:
- 66 kg of potassium iodide (50 g/dm³ of iodine),
- 6 kg of sodium selenate (VI) (2,5 g/dm³ of selenium),
- 2 kg of sodium salicylate (2 g/dm³).

To obtain Formulation A, into the reactor, 950 dm³ of water is poured, which is then preheated to a temperature of 20°C. Then potassium iodide in an amount of 66 kg, sodium selenate (VI) in an amount of 6 kg, and sodium salicylate in an amount of 2 kg are added. The solution is mixed until all the components are dissolved, keeping the temperature of the solution in the range of 20-25°C for 1 hour, after which it is checked whether the pH is in the range of 8.0-8.4, and if necessary, ammonia water is added in an amount of 1-25 dm³. The water is then added to obtain a total solution volume of 1000 dm³. As a result of the conducted process, 1000 dm³ of the finished product is obtained.

Stability studies for Formulation A were carried out in the form of accelerated aging tests, consisting in storing products in sealed packages at a temperature of -5°C, +5°C, 20°C, 40°C and alternately at -5°C (one week) and 40°C (one week) for a period of 1 month. The obtained results confirmed that the preparation is stable (no solid was precipitated and no reduction in iodine content was observed), in the temperature range from -5°C to +40°C, for a period of one month and under standard storage conditions from +5°C to +30°C for a period of one year.

The preparation (Formulation A) was used for biofortification of basil (leafy vegetable plant). 2 foliar applications were applied at a dose of 1 dm³/ha, at 48h intervals, to plants in the 3-4 side shoots phase, with the first application 7 days before the harvest, and the second application 5 days before the harvest. 400 dm³/ha of working solution per one application was used. The plants were collected and the content of iodine and selenium in basil leaves was assayed and compared with Formulation 0. The results are shown in Table 1.

**Table 1**

| Object | Formulation description 1 dm³/hectare dose | Iodine content [µg/kg DW] | Iodine content [µg/100 g FW] | Selenium content [µg/kg DW] | Selenium content [µg/100 g FW] |
|---|---|---|---|---|---|
| Control | Water | 11 | 0.09 | 22 | 0.153 |
| Formulation 0 | I=200 g/dm³ | 24 | 0.207 | 140 | 1.212 |
| | Se=10 g/dm³ | | | | |
| Formulation A | I=50 g/dm³ | 14 | 0.121 | 51 | 0.420 |
| | Se=2.5 g/dm³ | | | | |
| | SalNa=2 g/dm³ | | | | |

SalNa means sodium salicylate, DW - dry weight, and FW - fresh weight.

The use of the preparation containing iodine and selenium, in combination with sodium salicylate, results in more effective enrichment of basil leaves with iodine and selenium, compared to the application of iodine and selenium compounds alone without sodium salicylate. At a four times higher dose of iodine and selenium in Formulation 0 than in Formulation A, the increase in the content of I and Se in plants treated with Formulation 0 was less than twice as high as using Formulation A.

### Example 2

An iodine-selenium preparation in the form of an aqueous solution (Formulation B) in 1000 dm³ contains:
- 264 kg of potassium iodide (200 g/dm³ of iodine),
- 24 kg of sodium selenate (VI) (10 g/dm³ of selenium),
- 20 kg of sodium salicylate (20 g/dm³).

To obtain Formulation B, into the reactor, 900 dm³ of water is poured, which then is preheated to a temperature of 20°C. Then potassium iodide in an amount of 264 kg, sodium selenate (VI) in an amount of 24 kg, and sodium salicylate in an amount of 20 kg are added. The solution is mixed until all the components are dissolved, keeping the temperature of the solution in the range of 20-25°C for 1 hour, after which it is checked whether the pH is in the range of 8.0-8.4, and if necessary, ammonia water is added in an amount of 1-25 dm³. The water is then added to obtain a total solution volume of 1000 dm³. As a result of the conducted process, 1000 dm³ of the finished product is obtained.

Stability studies for Formulation B were carried out in the form of accelerated aging tests, described in Example 1. The obtained results confirmed that the preparation is stable (no solid was precipitated and no reduction in iodine content was observed), in the temperature range from -5°C to +40°C, for a period of one month and under standard storage conditions from +5°C to +30°C for a period of one year. The preparation (Formulation B) was used for biofortification of basil (leafy vegetable plant). 2 foliar applications were applied at a dose of 1 dm³/ha, at 48h intervals, to plants in the 3-4 side shoots phase, with the first application 7 days before the harvest, and the second application 5 days before the harvest. 400 dm³/ha of working solution per one application was used. The plants were collected and their content of iodine and selenium in basil leaves was assayed and compared with Formulation 0. The results are shown in Table 2.

SalNa means sodium salicylate, DW - dry weight, and FW - fresh weight.

**Table 2**

| Object | Formulation description 1 dm³/hectare dose | Iodine content [µg/kg DW] | Iodine content [µg/100 g FW] | Selenium content [µg/kg DW] | Selenium content [µg/100 g FW] |
|---|---|---|---|---|---|
| Control | Water | 11 | 0.09 | 22 | 0.153 |
| Formulation 0 | I=200 g/dm³ | 24 | 0.207 | 140 | 1.212 |
| | Se=10 g/dm³ | | | | |
| Formulation B | I=200 g/dm³ | 79 | 0.656 | 355 | 2.905 |
| | Se=10 g/dm³ | | | | |
| | SalNa=20 g/dm³ | | | | |

Application the preparation containing iodine and selenium, in combination with sodium salicylate, results in more effective enrichment of basil leaves with iodine and selenium, compared to the application of iodine and selenium compounds alone without sodium salicylate. At the same dose of iodine and selenium in Formulation 0 and Formulation B, the increase in the content of I and Se in plants was about three times higher using Formulation B.

### Example 3

An iodine-selenium preparation in the form of an aqueous solution (Formulation C) in 1000 dm³ contains:
- 396 kg of potassium iodide (300 g/dm³ of iodine),
- 36 kg of sodium selenate (VI) (15 g/dm³ of selenium),
- 30 kg of sodium salicylate (30 g/dm³).

To obtain Formulation C, into the reactor, 800 dm³ of water is poured, which is then preheated to a temperature of 20°C. Then potassium iodide in an amount of 396 kg, sodium selenate (VI) in an amount of 36 kg, and sodium salicylate in an amount of 30 kg are added. The solution is mixed until all the components are dissolved, keeping the temperature of the solution in the range of 20-25°C for 1 hour, after which it is checked whether the pH is in the range of 8.0-8.4, and if necessary, ammonia water is added in an amount of 1-25 dm³. The water is then added to obtain a total solution volume of 1000 dm³. As a result of the conducted process, 1000 dm³ of the finished product is obtained.

Stability studies for Formulation C were carried out in the form of accelerated aging tests, described in Example 1. The obtained results confirmed that the preparation is stable (no solid was precipitated and no reduction in iodine content was observed), in the temperature range from -5°C to +40°C, for a period of one month and under standard storage conditions from +5°C to +30°C for a period of one year.

The preparation was used for fortification of basil (leafy vegetable plant). 2 foliar applications were applied at a dose of 1 dm³/ha, at 48h intervals, to plants in the 3-4 side shoots phase, with the first application 7 days before the harvest, and the second application 5 days before the harvest. 400 dm³/ha of working solution per one application was used. The plants were collected and their content of iodine and selenium in leaves was assayed and compared with Formulation 0. The results are shown in Table 3.

SalNa means sodium salicylate, DW - dry weight, and FW - fresh weight.

**Table 3**

| Object | Formulation description 1 dm³/hectare dose | Iodine content [µg/kg DW] | Iodine content [µg/100 g FW] | Selenium content [µg/kg DW] | Selenium content [µg/100 g FW] |
|---|---|---|---|---|---|
| Control | Water | 11 | 0.09 | 22 | 0.153 |
| Formulation 0 | I=200 g/dm³ | 24 | 0.207 | 140 | 1.212 |
| | Se=10 g/dm³ | | | | |
| Formulation C | I=300 g/dm³ | 84 | 0.693 | 492 | 4.024 |
| | Se=15 g/dm³ | | | | |
| | SalNa=30 g/dm³ | | | | |

The application of the preparation containing iodine and selenium, in combination with sodium salicylate, results in more effective enrichment of basil leaves with iodine and selenium, compared to the application of iodine and selenium compounds alone without sodium salicylate. At a 1/3 higher dose of iodine and selenium in Formulation C than in Formulation 0, the increase in the content of I and Se in plants was about four times higher using Formulation C.

### Example 4

Iodine-selenium preparations in the form of an aqueous solution, described in Examples 1, 2, and 3 (Formulation A, Formulation B, Formulation C), were used in the cultivation of carrots (root vegetable) in an amount of 1 dm³/ha, through foliar application in the developmental phases during application: BBCH 16-18 (6-8 leaf phase), BBCH 21-22 (11-12 leaf phase, vegetative growth), BBCH 35-36 (vegetative growth phase, leaf development), BBCH 40-42 (root development phase when the root reaches 20% of the typical diameter).

Carrot harvesting was performed in the BBCH 48 phase when the root reaches 80% of the typical diameter (8 days since the last treatment). 400 dm³/ha of working solution per one application was used.

The content of iodine and selenium for Formulation A, Formulation B, and Formulation C after harvesting in carrot leaves is shown in Table 4, and in carrot roots in Table 5. Table 6 shows the yield and quality parameters for Formulation B.

**Table 4**

| Object | Formulation description 1 dm³/hectare dose | Iodine content [mg/kg DW] | Iodine content [µg/100 g FW] | Selenium content [mg/kg DW] | Selenium content [µg/100 g FW] |
|---|---|---|---|---|---|
| Control | Water | 0.472 | 7.398 | 0.037 | 0.580 |
| Formulation 0 | I=200 g/dm³ | 4.766 | 72.200 | 0.400 | 6.061 |
| | Se=10 g/dm³ | | | | |
| Formulation A | I=50 g/dm³ | 1.279 | 19.47 | 0.248 | 3.837 |
| | Se=2.5 g/dm³ | | | | |
| | SalNa=2 g/dm³ | | | | |
| Formulation B | I=200 g/dm³ | 4.790 | 73.760 | 0.598 | 9.202 |
| | Se=10 g/dm³ | | | | |
| | SalNa=20 g/dm³ | | | | |
| Formulation C | I=300 g/dm³ | 8.890 | 167.749 | 1.175 | 22.190 |
| | Se=15 g/dm³ | | | | |
| | SalNa=30 g/dm³ | | | | |

**Table 5**

| Object | Formulation description 1 dm³/hectare dose | Iodine content [mg/kg DW] | Iodine content [µg/100 g FW] | Selenium content [mg/kg DW] | Selenium content [µg/100 g FW] |
|---|---|---|---|---|---|
| Control | Water | 0.0284 | 0.369 | 0.014 | 0.180 |
| Formulation 0 | I=200 g/dm³ | 0.274 | 3.474 | 0.102 | 1.291 |
| | Se=10 g/dm³ | | | | |
| Formulation A | I=50 g/dm³ | 0.049 | 0.630 | 0.0419 | 0.551 |
| | Se=2.5 g/dm³ | | | | |
| | SalNa=2 g/dm³ | | | | |
| Formulation B | I=200 g/dm³ | 0.299 | 3.945 | 0.112 | 1.473 |
| | Se=10 g/dm³ | | | | |
| | SalNa=20 g/dm³ | | | | |
| Formulation C | I=300 g/dm³ | 0.423 | 5.466 | 0.203 | 2.611 |
| | Se=15 g/dm³ | | | | |
| | SalNa=30 g/dm³ | | | | |

| | | | | | |
|---|---|---|---|---|---|
| SalNa means sodium salicylate, DW - dry weight, and FW - fresh weight.. | | | | | |

**Table 6**

| Object | Formulation description 1 dm³/hectare dose | Brix extract [%] | Total commercial yield of storage roots [t/ha] | Dry weight content in roots [% DW] |
|---|---|---|---|---|
| Control | Water | 9.15 | 77.12 | 12.74 |
| Formulation 0 | I=200 g/dm³ | 9.05 | 76.79 | 12.68 |
| | Se=10 g/dm³ | | | |
| Formulation B | I=200 g/dm³ | 9.30 | 79.61 | 13.12 |
| | Se=10 g/dm³ | | | |
| | SalNa=20 g/dm³ | | | |

The presented results confirm that iodine and selenium are more effectively absorbed from preparations containing sodium salicylate, which clearly had a biostimulating effect on the quality and yield- parameters of the vegetative mass of carrots. Increased absorption of I and Se translates into an increased yield of vegetative mass of the plant. In the case of Formulation B, an increase in the total yield in relation to the control group (Formulation 0) and an increase in quality indicators were observed.

### Example 5

Iodine-selenium preparations in the form of an aqueous solution, described in Examples 1, 2, and 3 (Formulation A, Formulation B, Formulation C), were used in the cultivation of butterhead lettuce (leaf vegetables) in an amount of 1 dm³/ha. Two foliar applications of the preparation were applied in the head formation phase, the first application 3 weeks before the harvest (BBCH 46-47), and the second application 2 weeks before the harvest (BBCH 48-49). 400 dm³/ha of working solution per one application was used. The content of iodine and selenium for Formulation A, Formulation B, and Formulation C after harvesting in butterhead lettuce leaves is shown in Table 7. Table 8 shows the yield and quality parameters for Formulation B. SalNa means sodium salicylate, DW - dry weight, and FW - fresh weight.

**Table 7**

| Object | Formulation description 1 dm³/hectare dose | Iodine content [mg/kg DW] | Iodine content [µg/100 g FW] | Selenium content [mg/kg DW] | Selenium content [µg/100 g FW] |
|---|---|---|---|---|---|
| Control | Water | 0.42 | 4.515 | 0.014 | 0.1505 |
| Formulation 0 | I=200 g/dm³ | 2.97 | 28.957 | 0.096 | 0.936 |
| | Se=10 g/dm³ | | | | |
| Formulation A | I=50 g/dm³ | 0.88 | 9.68 | 0.048 | 0.528 |
| | Se=2.5 g/dm³ | | | | |
| | SalNa=2 g/dm³ | | | | |
| Formulation B | I=200 g/dm³ | 3.52 | 36.72 | 0.192 | 2.101 |
| | Se=10 g/dm³ | | | | |
| | SalNa=20 g/dm³ | | | | |
| Formulation C | I=300 g/dm³ | 3.71 | 39.81 | 0.234 | 2.574 |
| | Se=15 g/dm³ | | | | |
| | SalNa=30 g/dm³ | | | | |

**Table 8**

| Object | Formulation description 1 dm³/hectare dose | Lettuce head weight [g] | Dry weight content [%DW] | mg NO₃/kg FW | Chlorophyll [µg/cm²] |
|---|---|---|---|---|---|
| Control | Water | 265.78 | 4 | 1343.6 | 24.68 |
| Formulation 0 | I=200 g/dm³ | 264.45 | 3.9 | 1261.3 | 24.40 |
| | Se=10 g/dm³ | | | | |
| Formulation B | I=200 g/dm³ | 268.39 | 3.9 | 1135.3 | 24.77 |
| | Se=10 g/dm³ | | | | |
| | SalNa=20 g/dm³ | | | | |

The obtained results confirm that the use of foliar application of Formulation B has positively influenced the weight of the head of butterhead lettuce in relation to the Control and in relation to Formulation 0. The use of Formulation B reduced the accumulation of nitrates in lettuce leaves compared to Control by 16% and about 11% compared to Formulation 0 without sodium salicylate.

The application of Formulation B led to an increase in the content of chlorophyll (photosynthetic pigments ) in lettuce leaves, thus improving the photosynthetic efficiency, which translates into stimulation of vegetative growth in butterhead lettuce cultivation. The reflection of this biostimulation effect was observed in the size of the yield (the weight of the head of butterhead lettuce).

### Example 6

The iodine-selenium preparation in the form of an aqueous solution, described in Example 2 (Formulation B), was applied to the roots in the form of fertigation in hydroponic (soilless) cultivation of butterhead lettuce (leaf vegetables). For fertigation, a solution containing 5·10⁻⁶ dm³ of the preparation in 1 dm³ of water was used (from 6 leaf phase of the BBCH16 to the end of the cultivation, when the head reached the typical size and shape of BBCH 48-49) with each fertigation cycle. The content of iodine and selenium after harvesting in lettuce leaves is shown in Table 9.

**Table 9**

| Object | Formulation description 1 dm³/hectare dose | Iodine content [mg/kg DW] | Iodine content [mg/100 g FW] | Selenium content [mg/kg DW] | Selenium content [mg/100 g FW] |
|---|---|---|---|---|---|
| Control | Water | 2.83 | 0.17 | 1.15 | 0.071 |
| Formulation 0 | 1mg I; 0.05mg | 624.12 | 37.57 | 7.23 | 0.441 |
| | Se/1dm³ of the medium | | | | |
| Formulation B | 1mg I; | 661.76 | 39.36 | 8.64 | 0.527 |
| | 0.05mg Se; 0.1mg | | | | |
| | SalNa/1dm³ of the medium | | | | |

The application of the preparation containing iodine and selenium, in combination with sodium salicylate, results in more effective enrichment of lettuce leaves with iodine and selenium, compared to the application of iodine and selenium compounds alone without sodium salicylate.

### Example 7

Iodine-selenium preparations in the form of an aqueous solution, described in Examples 1, 2, and 3 (Formulation A, Formulation B, Formulation C), were used in the cultivation of the potato (agricultural plant) in an amount of 1 dm³/ha. Three foliar applications were performed every 14 days starting from the beginning of the BBCH 31 phase (beginning of crop cover 10% of plants meet between rows), then in the BBCH 40 phase (tuber initiation) and in the BBCH 47 phase, i.e. 70% of total final tuber mass reached.

300 dm³/ha of working solution per one application was used.

The content of iodine and selenium for Formulation A, Formulation B, and Formulation C after harvesting in potato leaves is shown in Table 10.

SalNa means sodium salicylate, DW - dry weight, and FW - fresh weight.

**Table 10**

| Object | Formulation description 1 dm³/hectare dose | Iodine content [mg/kg DW] | Iodine content [µg/100 g FW] | Selenium content [mg/kg DW] | Selenium content [µg/100 g FW] |
|---|---|---|---|---|---|
| Control | Water | 1.08 | 7.578 | 0.11 | 0.771 |
| Formulation 0 | I=200 g/dm³ | 6.68 | 46.32 | 0.375 | 2.600 |
| | Se=10 g/dm³ | | | | |
| Formulation A | I=50 g/dm³ | 1.98 | 13.65 | 0.267 | 1.840 |
| | Se=2.5 g/dm³ | | | | |
| | SalNa=2 g/dm³ | | | | |
| Formulation B | I=200 g/dm³ | 7.76 | 54.456 | 0.801 | 5.614 |
| | Se=10 g/dm³ | | | | |
| | SalNa=20 g/dm³ | | | | |
| Formulation C | I=300 g/dm³ | 10.67 | 74.877 | 0.928 | 6.512 |
| | Se=15 g/dm³ | | | | |
| | SalNa=30 g/dm³ | | | | |

### Example 8

Iodine-selenium preparations in the form of an aqueous solution, described in Examples 1, 2, and 3 (Formulation A, Formulation B, Formulation C), were used in the cultivation of maize (agricultural plant) in an amount of 1 dm³/ha. Three foliar applications were performed every 14 days, performed from the 6-8 leaf phase (BBCH 16-18) to the moment when it is still possible to enter the field (BBCH 51, beginning of tassel/ panicle emergence: tassel/ panicle detectable a top of stem ).

200 dm³/ha of working liquid per one application was used.

The content of iodine and selenium for Formulation A, Formulation B, and Formulation C after harvesting in maize leaves is shown in Table 11.

SalNa means sodium salicylate, DW - dry weight, and FW - fresh weight.

**Table 11**

| Object | Formulation description 1 dm³/hectare dose | Iodine content [mg/kg DW] | Iodine content [µg/100 g FW] | Selenium content [mg/kg DW] | Selenium content [µg/100 g FW] |
|---|---|---|---|---|---|
| Control | Water | 0.61 | 15.86 | 0.070 | 1.82 |
| Formulation 0 | I=200 g/dm³ | 8.66 | 242.56 | 1.473 | 41.17 |
| | Se=10 g/dm³ | | | | |
| Formulation A | I=50 g/dm³ | 2.73 | 69.91 | 0.517 | 13.24 |
| | Se=2.5 g/dm³ | | | | |
| | SalNa=2 g/dm³ | | | | |
| Formulation B | I=200 g/dm³ | 9.29 | 256.49 | 1.652 | 42.30 |
| | Se=10 g/dm³ | | | | |
| | SalNa=20 g/dm³ | | | | |
| Formulation C | I=300 g/dm³ | 11.17 | 308.14 | 2.461 | 62.75 |
| | Se=15 g/dm³ | | | | |
| | SalNa=30 g/dm³ | | | | |

### Example 9

Iodine-selenium preparations in the form of an aqueous solution, described in Examples 1, 2, and 3 (Formulation A, Formulation B, Formulation C), were used in the cultivation of winter wheat (agricultural plant) in an amount of 1 dm³/ha. Three foliar applications were performed every 14 days starting from the BBCH 22-29 phase (end of the tillering phase, maximum number of tillers detectable), through the BBCH 30-39 phase, up to the BBCH 51-61 phase ( end of heading: inflorescence fully emerged beginning of the flowering phase; first anthers visile). 300 dm³/ha of working solution per one application was used. The content of iodine and selenium for Formulation A, Formulation B, and Formulation C after harvesting in winter wheat ear is shown in Table 12, and in the stalk in Table 13. Whereas, Table 14 shows the content of chlorophyll, flavonoids, and nutrient level for Formulation B.

**Table 12**

| Object | Formulation description 1 dm³/hectare dose | Iodine content [mg/kg DW] | Iodine content [µg/100 g FW] | Selenium content [mg /kg DW] | Selenium content [µg/100 g FW] |
|---|---|---|---|---|---|
| Control | Water | 0.155 | 5.43 | 0.037 | 1.31 |
| Formulation 0 | I=200 g/dm³ | 1.07 | 37.28 | 0.209 | 7.34 |
| | Se=10 g/dm³ | | | | |
| Formulation A | I=50 g/dm³ | 0.214 | 7.44 | 0.052 | 1.82 |
| | Se=2.5 g/dm³ | | | | |
| | SalNa=2 g/dm³ | | | | |
| Formulation B | I=200 g/dm³ | 1.13 | 39.38 | 0.657 | 22.98 |
| | Se=10 g/dm³ | | | | |
| | SalNa=20 g/dm³ | | | | |
| Formulation C | I=300 g/dm³ | 1.34 | 46.69 | 0.661 | 23.11 |
| | Se=15 g/dm³ | | | | |
| | SalNa=30 g/dm³ | | | | |

**Table 13**

| Object | Formulation description 1 dm³/hectare dose | Iodine content [mg/kg DW] | Iodine content [µg/100 g FW] | Selenium content [mg/kg DW] | Selenium content [µg/100 g FW] |
|---|---|---|---|---|---|
| Control | Water | 0.120 | 3.83 | 0.042 | 1.35 |
| Formulation 0 | I=200 g/dm³ | 0.53 | 17.01 | 0.148 | 4.732 |
| | Se=10 g/dm³ | | | | |
| Formulation A | I=50 g/dm³ | 0.164 | 5.26 | 0.074 | 2.368 |
| | Se=2.5 g/dm³ | | | | |
| | SalNa=2 g/dm³ | | | | |
| Formulation B | I=200 g/dm³ | 0.69 | 22.15 | 0.627 | 20.07 |
| | Se=10 g/dm³ | | | | |
| | SalNa=20 g/dm³ | | | | |
| Formulation C | I=300 g/dm³ | 1.135 | 36.317 | 0.687 | 21.89 |
| | Se=15 g/dm³ | | | | |
| | SalNa=30 g/dm³ | | | | |

| | | | | | |
|---|---|---|---|---|---|
| SalNa means sodium salicylate, DW - dry weight, and FW - fresh weight. | | | | | |

**Table 14**

| Object | Formulation description 1 dm³/hectare dose | Chlorophyll [µg/cm²] | Flavonols [µg/cm²] | NBI |
|---|---|---|---|---|
| Control | Water | 52.51 | 1.44 | 36.88 |
| Formulation 0 | I=200 g/dm³ | 54.02 | 1.43 | 37.69 |
| | Se=10 g/dm³ | | | |
| Formulation B | I=200 g/dm³ | 54.78 | 1.48 | 37.82 |
| | Se=10 g/dm³ | | | |
| | SalNa=20 g/dm³ | | | |

The obtained results show that in the cultivation of winter wheat, Formulation B stimulated the operation of a photosynthetic apparatus. The increase in chlorophyll content and the high NBI index, the degree of plant nutrition, is the first stage to the proper growth and development of winter wheat and consequently the increase in yield.

### Example 10

The iodine-selenium preparation in the form of an aqueous solution, described in Example 2 (Formulation B), was applied to the roots in the form of fertigation in hydroponic cultivation of strawberries (orchards and berries). For fertigation, a solution containing 5·10⁻⁶ dm³ of the preparation in 1 dm³ of water with each fertigation cycle was used, starting from the end of flowering and ending with the fruit harvest.

The content of iodine and selenium after harvesting in strawberry fruit is shown in Table 15. Whereas, Table 16 shows the yield and quality parameters of the strawberry.

SalNa means sodium salicylate, DW - dry weight, and FW - fresh weight.

**Table 15**

| Object | Formulation description 1 dm³/hectare dose | Iodine content [mg/kg DW] | Iodine content [µg/100 g FW] | Selenium content [mg/kg DW] | Selenium content [µg/100 g FW] |
|---|---|---|---|---|---|
| Control | Water | 0.029 | 0.27 | 0.0189 | 0.188 |
| Formulation 0 | 1mg I; | 0.619 | 7.32 | 0.286 | 3.157 |
| | 0.05mg Se/1dm³ of the medium | | | | |
| Formulation B | 1mg I; | 0.760 | 8.97 | 0.3357 | 3.706 |
| | 0.05mg Se; | | | | |
| | 0.1mg SalNa/1dm³ of the medium | | | | |

**Table 16**

| Object | Formulation description 1 dm³/hectare dose | BRIX extract % | Firmness (kG) | % DW | Total commercial yield [t/ha] |
|---|---|---|---|---|---|
| Control | Water | 6.18 | 0.258 | 9.26 | 63.49 |
| Formulation 0 | 1mg I; | 6.53 | 0.249 | 9.89 | 65.03 |
| | 0.05mg Se/1dm³ of the medium | | | | |
| Formulation B | 1mg I; | 6.69 | 0.294 | 9.94 | 67.77 |
| | 0.05mg Se; | | | | |
| | 0.1mg SalNa/1dm³ of the medium | | | | |

The application of Formulation B in the form of fertigation in hydroponic cultivation had a positive biostimulating effect on yield parameters and the quality of strawberry fruit. Compared to the Control, using Formulation B, there was an 8% increase in the extract content (%BRIX), a 6% increase in the total yield and greater firmness and dry weight (increase within 10%). Also in comparison to Formulation 0, which did not contain sodium salicylate, higher parameters for Formulation B were observed, i.e. about 2% increase in the extract content (%BRIX), 4% increase in the total yield and greater firmness and dry weight.

### Example 11

The iodine-selenium preparation in the form of an aqueous solution, described in Example 2 (Formulation B), was used in the cultivation of an apple orchard (orchards and berries) in an amount of 1 dm³/ha. Four foliar applications were performed in the development phases: from the full flowering of BBCH 65-69, through the BBCH 70-72 phase (the fruit size of up to 20 mm), then BBCH 74-75 (the fruit about half final size) and in the BBCH 77-78 phase (the fruit about 80% of final size). 750 dm³/ha of working solution per one application was used. The content of iodine and selenium for Formulation 0 and Formulation B in fruit is shown in Table 17.

**Table 17**

| Object | Formulation description 1 dm³/hectare dose | Iodine content [mg/kg DW] | Iodine content [µg/100 g FW] | Selenium content [mg/kg DW] | Selenium content [µg/100 g FW] |
|---|---|---|---|---|---|
| Control | Water | 0.029 | 0.522 | 0.015 | 0.27 |
| Formulation 0 | I=200 g/dm³ | 0.91 | 15.2 | 0.11 | 1.9 |
| | Se=10 g/dm³ | | | | |
| Formulation B | I=200 g/dm³ | 1.06 | 17.8 | 0.16 | 2.7 |
| | Se=10 g/dm³ | | | | |
| | SalNa=20 g/dm³ | | | | |

The application of the preparation containing iodine and selenium, in combination with sodium salicylate, results in more effective enrichment of fruit with iodine and selenium, compared to the application of iodine and selenium compounds alone without sodium salicylate.

## Claims

1. An iodine-selenium preparation, in the form of an aqueous solution, containing potassium iodide and sodium selenate (VI), **characterized in that** 1000 dm³ of the preparation contains 66-396 kg of potassium iodide, 6-36 kg of sodium selenate, 2-30 kg of sodium salicylate, and the pH of the preparation is in the range of 7-10.

2. The preparation according to claim 1, **characterized in that** 1000 dm³ of the preparation contains 264 kg of potassium iodide, 24 kg of sodium selenate (VI), and 20 kg of sodium salicylate.

3. The preparation according to claim 1, **characterized in that** 1000 dm³ of the preparation contains ammonia water in an amount of up to 50 dm³.

4. Use of the iodine-selenium preparation in the form of an aqueous solution described in claim 1, containing in 1000 dm³: 66-396 kg of potassium iodide, 6-36 kg of sodium selenate (VI), 3-30 kg of sodium salicylate, the pH of which is in the range of 7-10, in plant cultivation, in a single dose of 0.5-1 dm³/ha of the crop, in the form of working solution, wherein the preparation is applied to the leaves or roots of the plants.

5. The use according to claim 4, **characterized in that**, for the cultivation of vegetable plants, 2-4 foliar applications are used during the vegetation period, every 2-14 days, wherein the first application takes place during the growing period of the harvestable plant part, and the amount of working solution is 200-400 dm³/ha per one application.

6. The use according to claim 4, **characterized in that**, for the cultivation of vegetable plants, in soil cultivation, the preparation is used every 2-3 fertigation cycles, starting from the initial development phases of harvestable plant part, wherein the cycles take place every 7 days, using a solution containing 5·10⁻⁶ dm³ of the preparation in 1 dm³ of water per one fertigation cycle, and in soilless cultivation, the preparation is used with each fertigation cycle, using a solution containing 5·10⁻⁶ dm³ of the preparation in 1 dm³ of water.

7. The use according to claim 4, **characterized in that**, for the cultivation of agricultural plants, 2-3 foliar applications are used every 7-14 days, and the amount of working solution is 200-300 dm³/ha per one application.

8. The use according to claim 4, **characterized in that**, for the cultivation of orchards and berries, 2-4 foliar applications are used during the vegetation period, every 7-14 days, wherein the first application is during the fruit setting period, while in the case it is necessary to limit the number of treatments, these are carried out in the final development stages, 1-3 weeks before the harvest, and the amount of working solution is 400-750 dm³/ha per one application.

9. The use according to claim 4, **characterized in that**, for the soil cultivation of orchards and berries, the preparation is used every 2-3 fertigation cycles, starting from the end of flowering and ending with fruit harvest, wherein the cycles take place every 7 days, using a solution containing 5·10⁻⁶ dm³ of the preparation in 1 dm³ of water per one fertigation cycle, and for soilless cultivation, the preparation is used with each cycle, using a solution containing 5·10⁻⁶ dm³ of the preparation in 1 dm³ of water.

## Patentansprüche

1. Eine Jod-Selen-Zubereitung, in Form einer wässrigen Lösung, enthaltend Kaliumiodid und Natriumselenat (VI), **dadurch gekennzeichnet, dass** 1000 dm³ der Zubereitung 66-396 kg Kaliumiodid, 6-36 kg Natriumselenat, 2-30 kg Natriumsalicylat enthält und der pH-Wert der Zubereitung im Bereich von 7-10 liegt.

2. Die Zubereitung nach Anspruch 1, **dadurch gekennzeichnet, dass** 1000 dm³ der Zubereitung 264 kg Kaliumiodid, 24 kg Natriumselenat (VI) und 20 kg Natriumsalicylat enthält.

3. Die Zubereitung nach Anspruch 1, **dadurch gekennzeichnet, dass** 1000 dm³ der Zubereitung Ammoniakwasser in einer Menge von bis zu 50 dm³ enthält.

4. Verwendung der in Anspruch 1 beschriebenen Jod-Selen-Zubereitung in Form einer wässrigen Lösung, enthaltend in 1000 dm³: 66-396 kg Kaliumiodid, 6-36 kg Natriumselenat (VI), 3-30 kg Natriumsalicylat, deren pH-Wert im Bereich von 7-10 liegt, im Pflanzenanbau, in einer Einzeldosis von 0,5-1 dm³/ha der Kultur, in Form einer Arbeitslösung, wobei die Zubereitung auf die Blätter oder Wurzeln der Pflanzen aufgetragen wird.

5. Die Verwendung nach Anspruch 4, **dadurch gekennzeichnet, dass** für den Anbau von Gemüsepflanzen 2-4 Blattapplikationen während der Vegetationsperiode, alle 2-14 Tage, verwendet werden, wobei die erste Applikation während der Wachstumsperiode des erntbaren Pflanzenteils stattfindet und die Menge der Arbeitslösung 200-400 dm³/ha pro Applikation beträgt.

6. Die Verwendung nach Anspruch 4, **dadurch gekennzeichnet, dass** für den Anbau von Gemüsepflanzen, beim Bodenanbau, die Zubereitung alle 2-3 Fruchtbarkeitszyklen verwendet wird, beginnend mit den anfänglichen Entwicklungsphasen des erntbaren Pflanzenteils, wobei die Zyklen alle 7 Tage stattfinden, unter Verwendung einer Lösung, die 5·10⁻⁶ dm³ der Zubereitung in 1 dm³ Wasser enthält, pro einem Fruchtbarkeitszyklus, und beim bodenlosen Anbau die Zubereitung mit jedem Fruchtbarkeitszyklus verwendet wird, unter Verwendung einer Lösung, die 5·10⁻⁶ dm³ der Zubereitung in 1 dm³ Wasser enthält.

7. Die Verwendung nach Anspruch 4, **dadurch gekennzeichnet, dass** für den Anbau von landwirtschaftlichen Pflanzen 2-3 Blattapplikationen, alle 7-14 Tage, verwendet werden und die Menge der Arbeitslösung 200-300 dm³/ha pro Applikation beträgt.

8. Die Verwendung nach Anspruch 4, **dadurch gekennzeichnet, dass** für den Anbau von Obstgärten und Beeren 2-4 Blattapplikationen während der Vegetationsperiode, alle 7-14 Tage, verwendet werden, wobei die erste Applikation während der Fruchtbildungsperiode erfolgt, während, falls es notwendig ist, die Anzahl der Behandlungen zu begrenzen, werden diese in den letzten Entwicklungsstadien durchgeführt, die 1-3 Wochen vor der Ernte fallen, und die Menge der Arbeitslösung 400-750 dm³/ha pro Applikation beträgt.

9. Die Verwendung nach Anspruch 4, **dadurch gekennzeichnet, dass** für die Bodenanbau von Obstgärten und Beeren die Zubereitung alle 2-3 Fruchtbarkeitszyklen verwendet wird, beginnend mit dem Ende der Blüte und endend mit der Obsternte, wobei die Zyklen alle 7 Tage stattfinden, unter Verwendung einer Lösung, die 5·10⁻⁶ dm³ der Zubereitung in 1 dm³ Wasser enthält, pro einem Fruchtbarkeitszyklus, und für bodenlosen Anbau die Zubereitung mit jedem Zyklus verwendet wird, unter Verwendung einer Lösung, die 5·10⁻⁶ dm³ der Zubereitung in 1 dm³ Wasser enthält.

## Revendications

1. Préparation d'iode-sélénium, sous la forme d'une solution aqueuse, contenant de l'iodure de potassium et du sélénate de sodium (VI), **caractérisée en ce que** 1000 dm³ de la préparation contient 66 à 396 kg d'iodure de potassium, 6 à 36 kg de sélénate de sodium, 2 à 30 kg de salicylate de sodium, et le pH de la préparation est dans la plage de 7 à 10.

2. Préparation selon la revendication 1, **caractérisée en ce que** 1000 dm³ de la préparation contient 264 kg d'iodure de potassium, 24 kg de sélénate de sodium (VI) et 20 kg de salicylate de sodium.

3. Préparation selon la revendication 1, **caractérisée en ce que** 1000 dm³ de la préparation contient de l'eau ammoniacale en une quantité allant jusqu'à 50 dm³.

4. Utilisation de la préparation iode-sélénium sous la forme d'une solution aqueuse décrite dans la revendication 1, contenant dans 1000 dm³ : 66 à 396 kg d'iodure de potassium, 6 à 36 kg de sélénate de sodium (VI), 3 à 30 kg de salicylate de sodium, dont le pH est dans la plage de 7 à 10, en culture de plantes, en une seule dose de 0,5 à 1 dm³/ha de la culture, sous la forme d'une solution de travail, dans laquelle la préparation est appliquée sur les feuilles ou les racines des plantes.

5. Utilisation selon la revendication 4, **caractérisée en ce que**, pour la culture de plantes potagères, 2 à 4 applications foliaires sont utilisées pendant la période de végétation, tous les 2 à 14 jours, dans laquelle la première application a lieu pendant la période de croissance de la partie de plante récoltable, et la quantité de solution de travail est de 200 à 400 dm³/ha par application.

6. Utilisation selon la revendication 4, **caractérisée en ce que**, pour la culture de plantes potagères, dans la culture du sol, la préparation est utilisée tous les 2-3 cycles de fertigation, à partir des phases de développement initiales de la partie de plante récoltable, dans laquelle les cycles ont lieu tous les 7 jours, en utilisant une solution contenant 5.10⁻⁶ dm³ de la préparation dans 1 dm³ d'eau par cycle de fertigation, et dans la culture hors sol, la préparation est utilisée à chaque cycle de fertigation, en utilisant une solution contenant 5.10⁻⁶ dm³ de la préparation dans 1 dm³ d'eau.

7. Utilisation selon la revendication 4, **caractérisée en ce que**, pour la culture de plantes agricoles, 2 à 3 applications foliaires sont utilisées tous les 7 à 14 jours, et la quantité de solution de travail est de 200 à 300 dm³/ha par application.

8. Utilisation selon la revendication 4, **caractérisée en ce que**, pour la culture de vergers et de baies, 2 à 4 applications foliaires sont utilisées pendant la période de végétation, tous les 7 à 14 jours, dans laquelle la première application est pendant la période de fructification, alors que dans le cas où il est nécessaire de limiter le nombre de traitements, ceux-ci sont effectués dans les étapes finales de développement, tombant 1 à 3 semaines avant la récolte, et la quantité de solution de travail est de 400 à 750 dm³/ha par application.

9. Utilisation selon la revendication 4, **caractérisée en ce que**, pour la culture du sol des vergers et des baies, la préparation est utilisée tous les 2 à 3 cycles de fertigation, à partir de la fin de la floraison et jusqu'à la récolte des fruits, dans laquelle les cycles ont lieu tous les 7 jours, en utilisant une solution contenant 5.10⁻⁶ dm³ de la préparation dans 1 dm³ d'eau par cycle de fertigation, et pour la culture hors sol, la préparation est utilisée à chaque cycle, en utilisant une solution contenant 5.10⁻⁶ dm³ de la préparation dans 1 dm³ d'eau.
